(19) Europäisches Patentamt
European Patent Office
Office européen des brevets

(11) **EP 2 239 599 A2**

## EUROPEAN PATENT APPLICATION

(12)

(43) Date of publication:
**13.10.2010 Bulletin 2010/41**

(51) Int Cl.:
**G02B 3/04** *(2006.01)* **G11B 7/135** *(2006.01)*

(21) Application number: **10154716.4**

(22) Date of filing: **25.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **07.04.2009 KR 20090029954**

(71) Applicant: **Samsung Electronics Co., Ltd.**
**Suwon-si,**
**Gyeonggi-do 442-742 (KR)**

(72) Inventors:
 • **Park, Seong-su**
  **Gyeonggi-do (KR)**
 • **Morishita, Ichiro**
  **Yokohama (JP)**

 • **Park, Soo-han**
  **Gyeonggi-do (KR)**
 • **Ahn, Young-man**
  **Gyeonggi-do (KR)**
 • **Yu, Byeong-hyeon**
  **Seoul (KR)**
 • **Kim, Jong Il**
  **Gyeonggi-do 111-1103 (KR)**
 • **Hong, Jung-woo**
  **Gyeonggi-do (KR)**
 • **Kim, Su-hyun**
  **Gyeonggi-do (KR)**

(74) Representative: **Grootscholten, Johannes A.M. et al**
**Arnold & Siedsma**
**Sweelinckplein 1**
**2517 GK Den Haag (NL)**

(54) **Aspherical object lens**

(57) An object lens for an optical disk may include an aspherical lens surface, and an aspherical equation, which may be applied to form the aspherical lens surface may include two 2nd order function terms. Accordingly, a lens, which has a high numerical aperture (NA) and also has a small flexure on a lens surface or aberration, is provided.

# FIG. 1

EP 2 239 599 A2

**Description**

CROSS-REFERENCE TO RELATED APPLICATIONS

This application claims priority under 35 U.S.C. § 119 (a) from Korean Patent Application No. 10-2009-29954, filed on April 7, 2009, in the Korean Intellectual Property Office, the disclosure of which is incorporated herein by reference in its entirety.

BACKGROUND

1. Field of the Invention

The present general inventive concept relates to an object lens, and more particularly, to an object lens aberration of which is corrected for use in an optical information recording medium.

2. Description of the Related Art

In an optical system of an optical recording/reproducing apparatus employing an optical disk medium, an aspherical single object lens is generally used. The size of a spot formed on a recording medium by the object lens is required to be small in order to achieve recording information signal of high density, and a study on how to increase a numerical aperture (NA) of the object lens and how to use a light source for a short wavelength has been performed.
In designing the aspherical single object lens, an aspherical equation is used. In general, the maximum inclination angle of the object lens is above 70° even if an existing aspherical equation is used. However, a great maximum inclination angle of the object lens makes it difficult to evaluate geometric accuracy of a lens surface. This is because the maximum inclination angle measurable by an aspherical geometry evaluator is about 65°. Also, the great maximum inclination of the object lens makes it more difficult to form a film for antireflection coating and deteriorates a polarization property. In particular, if the NA is above 0.85, these problems become more serious.
Also, if an object lens is designed using the existing aspherical equation, a problem of flexure on the lens surface occurs. The flexure of the lens surface may reduce machining accuracy when the mold of the lens is machined and increase the flexure of spherical aberration.

SUMMARY

Example embodiments of the present general inventive concept provide a lens which has a high NA and also has small flexure on a lens surface or aberration.
Additional exemplary embodiments of the present general inventive concept will be set forth in part in the description which follows and, in part, will be obvious from the description, or may be learned by practice of the present general inventive concept.
Example embodiments of the present general inventive concept may be achieved by providing an object lens comprising an aspherical lens surface, wherein an aspherical equation which is applied to form the aspherical lens surface includes two 2nd order function terms.
The aspherical equation may include a function term of order higher than 2nd order.
The function term of order higher than 2nd order may include the following equation 1:

[Equation 1]

$$Z_1(h) = Ah^4 + Bh^6 + Ch^8 + Dh^{10}$$

wherein '$Z_1(h)$' denotes a distance from a surface passing a vertex of the object lens perpendicular to an optical axis to a lens surface facing a light source, 'h' denotes a distance from an axis of the object lens to a specific point perpendicular to the axis, and 'A', 'B', 'C', and 'D' denote aspherical coefficients.
The function term of order higher than 2nd order may include the following equation 2:

[Equation 2]

$$Z_2(h) = Ah^4 + Bh^6 + Ch^8 + Dh^{10} + Eh^{12} + Fh^{14} + Gh^{16}$$

wherein 'Z$_2$(h)' denotes a distance from a surface passing a vertex of the object lens perpendicular to an optical axis to a lens surface facing a light source, 'h' denotes a distance from an axis of the object lens to a specific point perpendicular to the axis, and 'A', 'B', 'C', 'D', 'E', 'F', and 'G' denote aspherical coefficients.

The coefficient 'G' of the 16th order function term may be a negative number.

The coefficient 'G' of the 16th order function term may satisfy the following equation 3:

[Equation 3]

$$-0.022 \leq \frac{G}{f} \leq -0.009$$

wherein 'f' denotes a focal distance.

A first 2nd order function term of the two 2nd function terms may indicate one of a spherical surface, a hyperboloid, an ellipsoidal surface, a paraboloidal surface, and a conicoid except a conic surface.

The first 2nd order function term may include the following equation 4:

[Equation 4]

$$Z_3(h) = \frac{ch^2}{1 + \sqrt{1 - (1+K)c^2h^2}}$$

wherein 'Z$_3$(h)' denotes a distance from a surface passing a vertex of the object lens perpendicular to an optical axis to a lens surface facing a light source, 'h' denotes a distance from an axis of the object lens to a specific point perpendicular to the axis, 'c' denotes a curvature which is a reference to determine an aspherical geometry, and 'K' denotes a conical constant.

A second 2nd order function term of the two 2nd order function terms may be a paraboloidal surface.

The second 2nd order function term may include the following equation 5:

[Equation 5]

$$Z_4(h) = Lh^2$$

wherein 'Z$_4$(h)' denotes a distance from a surface passing a vertex of the object lens perpendicular to an optical axis to a lens surface facing a light source, 'h' denotes a distance from an axis of the object lens to a specific point perpendicular to the axis, and 'L' denotes an aspherical coefficient.

The coefficient 'L' of the second 2nd order function term may be an opposite sign of the 'c' of the first 2nd order function term.

The coefficient 'L' of the second 2nd order function term may be a negative number.

The coefficient 'L' of the second 2nd order function term may satisfy the following equation 6:

[Equation 6]

$$R = \cfrac{1}{\cfrac{1}{r} + 2 \times L}$$

wherein 'R' denotes a basic curvature of the object lens and 'r' denotes an inverse number of 'c'.

The coefficient 'L' of the second 2nd order function term may satisfy the following equation 7:

[Equation 7]

$$0.40 \leq \cfrac{1}{fn} \times \cfrac{1}{\cfrac{1}{r} + 2L} \leq 0.45$$

wherein 'f' denotes a focal distance of the object lens, 'n' denotes a refractive index of an object lens for an optical disk, and 'r' denotes an inverse number of 'c'.

An angle between a beam of an outermost circumstance passing through the inside of the object lens and an optical axis may satisfy the following equation 8:

[Equation 8]

$$36° \leq \theta \leq 40°$$

The object lens may be an object lens for an optical disk.

The lens surface to which the aspherical equation is applied may be a lens surface facing a light source.

Embodiments of the present general inventive concept also provide for an aspherical equation applied to forming of a surface on an object lens, wherein the aspherical equation includes two 2nd order function terms and is derived in order to increase numerical aperture and minimize flexure of the lens.

BRIEF DESCRIPTION OF THE DRAWINGS

These and/or other exemplary embodiments of the present general inventive concept will become apparent and more readily appreciated from the following description of the exemplary embodiments, taken in conjunction with the accompanying drawings of which:

FIG. 1 is a view illustrating an object lens according to an exemplary embodiment of the present general inventive concept;
FIG. 2 is a view illustrating coefficients applied to an aspherical equation if the aspherical equation uses a 10th or lower order term according to exemplary embodiments of the present general inventive concept;
FIG. 3 is a view illustrating result values of a maximum inclination angle according to the aspherical coefficients of FIG. 2;
FIGS. 4A and 4B are views illustrating change in the aberration of the object lens designed according to exemplary embodiments of the present general inventive concept;
FIG. 5 is a view illustrating aspherical coefficients applied to an aspherical equation including a 16th or lower order function term according to other exemplary embodiments of the present general inventive concept;
FIG. 6 is a view illustrating a simulation result regarding performance data and a maximum inclination angle of the object lens if the aspherical coefficients of FIG. 5 are used;
FIGS. 7A to 7D are views illustrating change in the aberration of the object lens which is designed by applying the aspherical coefficients of FIG. 5;
FIG. 8 is a view illustrating examples of the aspherical coefficients when the object lens is designed according to other exemplary embodiments of the present general inventive concept;

FIG. 9 is a view illustrating a basic radius of curvature 'R' calculated based on 'c' and 2nd order function term coefficient 'L' of FIG. 8;

FIG. 10 is a view illustrating aberration calculated for manufacturing or assembling tolerance according to other exemplary embodiments of the present general inventive concept; and

FIG. 11 is a view illustrating a simulation result regarding a decenter characteristic and an image height according to an outermost circumstance beam gradient.

## DETAILED DESCRIPTION OF THE EMBODIMENTS

Reference will now be made in detail to the exemplary embodiments of the present general inventive concept, examples of which are illustrated in the accompanying drawings, wherein like reference numerals refer to like elements throughout. The exemplary embodiments are described below in order to explain the present general inventive concept by referring to the figures

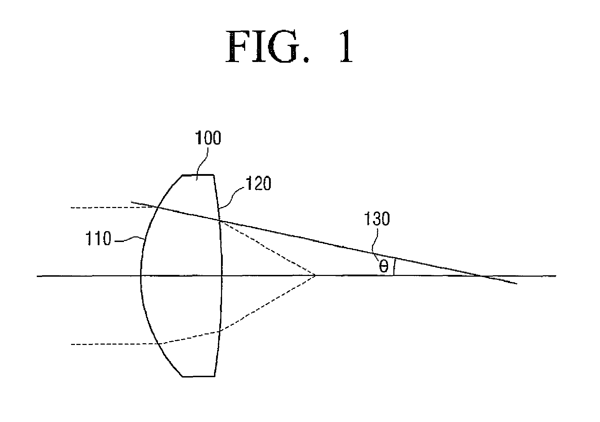

FIG. 1 illustrates an object lens according to an exemplary embodiment of the present general inventive concept. As illustrated in FIG. 1, an object lens 100 may include a first surface 110 facing a light source and a second surface 120 arranged opposite the first surface 110. If an aspherical equation is used in configuring the object lens 100, extra aberration correction may not be required.

Following equation 9 is an aspherical equation to form an aspherical surface of the object lens according to an exemplary embodiment of the present general inventive concept.

[Equation 9]

$$Z(h) = \frac{ch^2}{1+\sqrt{1-(1+K)c^2h^2}} + Lh^2 + Ah^4 + Bh^6 + Ch^8 + Dh^{10} + Eh^{12} + Fh^{14} + Gh^{16} + Hh^{18} + Jh^{20}$$

wherein 'Z(h)' denotes a distance from a surface passing a vertex of the object lens perpendicular to an optical axis to a lens surface facing the light source, 'h' denotes a distance from the axis of the object lens to a specific point perpendicular to the axis, 'c' denotes a curvature which is a reference to determine an aspherical geometry, 'K' denotes a conical constant, and 'A', 'B', 'C', 'D', 'E', 'G', 'H', 'J', and 'L' denote aspherical coefficients.

The above aspherical equation may be used to realize the first and the second surfaces of the object lens.

Explaining the first term of the aspherical equation in detail, the lens surface of the object lens is approximately determined according to the conical constant 'K'. More specifically, if 'K' is 0, the lens surface is a spherical surface, if 'K' is greater than -1 and less than 0, the lens surface is an ellipsoidal surface, if 'K' is -1, the lens surface is a paraboloidal surface, and if 'K' is less than -1, the lens surface is a hyperboloid. If 'K' is greater than 1, the lens surface is other curved surface except for the aforementioned curved surfaces. The first term of the equation 9 is called a "first 2nd order function term".

The second term of the asphercial equation may contribute to the formation of a paraboloidal lens surface of the object lens, and more particularly, may make the lens surface of the object lens formed by the first 2nd order function term more gentle or steeper. Therefore, aberration correction for the effective radius of the object lens may be achieved simply by the low-order term. The second term of the aspherical equation is called a "second 2nd order function term".

The coefficient 'L' of the second 2nd order function term of the aspherical equation is a sign opposite the curvature 'c'. The coefficient 'L' of the second 2nd order function term, which is applied to the first surface of the object lens having a large curvature, may be a negative number.

The basic radius of curvature 'R' of the object lens designed by the aspherical equation satisfies the following equation 10:

[Equation 10]

$$R = \cfrac{1}{\cfrac{1}{r} + 2 \times L}$$

wherein 'r' denotes an inverse number of the curvature 'c'.

The object lens can be easily designed using equation 10.

Also, the coefficient applied to the first surface of the object lens and the coefficient applied to the second surface of the object lens may satisfy a sine condition. The sine condition refers to an optimal condition under which the thickness of the center of the lens from an operating distance can be determined based on given NA and focal distance of the lens in order to reduce aberration of the lens or increase manufacturing or assembling tolerance, and a basic radius of curvature of the second surface of the lens may be determined based on a basic radius of curvature of the first surface of the lens.

If the curvature 'c' applied to the first surface of the object lens is normalized with the focal distance 'f' and a refractive index 'n' of the lens, the lens may be designed with a range as the following equation 11:

[Equation 11]

$$0.40 \leq \frac{1}{fn} \times \cfrac{1}{\cfrac{1}{r} + 2L} \leq 0.45$$

wherein 'f' denotes a focal distance of the object lens and 'n' denotes a refractive index of the object lens.

If $\frac{1}{fn} \times \cfrac{1}{\cfrac{1}{r} + 2L}$ is less than 0.4, correction to satisfy the sine condition may be insufficient, and if $\frac{1}{fn} \times \cfrac{1}{\cfrac{1}{r} + 2L}$ is greater than 0.45, correction to satisfy the sine condition may be excessive. Accordingly, if 'f', 'n', 'r', and 'L' do not satisfy equation 11, comatic aberration or other aberration may be great around the center of the lens.

The remaining terms of the aspherical equation is called '4th or higher order function terms' and may contribute to the correction of aberration of the object lens. In particular, 4th or higher order and 10th or lower order function terms may contribute to the formation of an object lens and the correction of aberration within an effective radius, and 12th or higher order function term may contribute to the formation of an object lens and the correction of aberration outside the effective radius.

The center thickness 'd' of the object lens to which the present inventive general concept is applied is 1.75mm, the refractive index 'n' is 1.52322, the design wavelength 'λ' is 405nm, and the focal distance 'f' is 1.41mm. Also, the effective radius is 1.20mm and NA is 0.85.

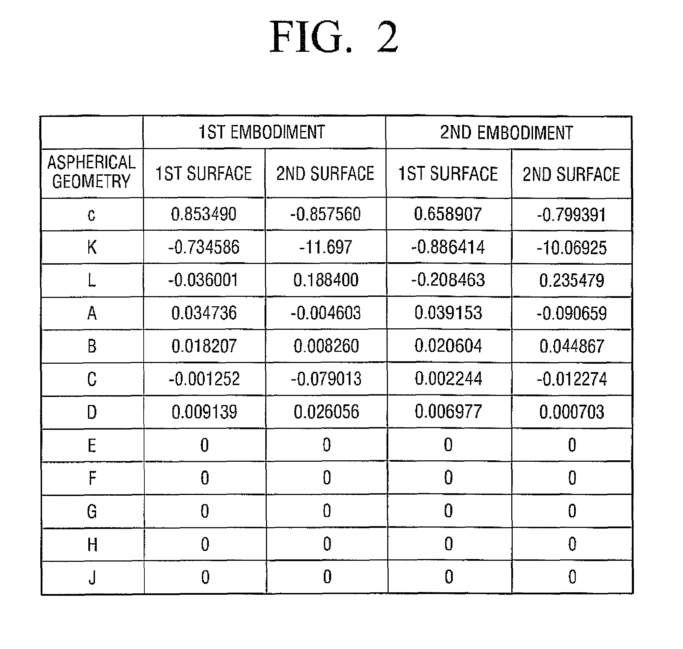

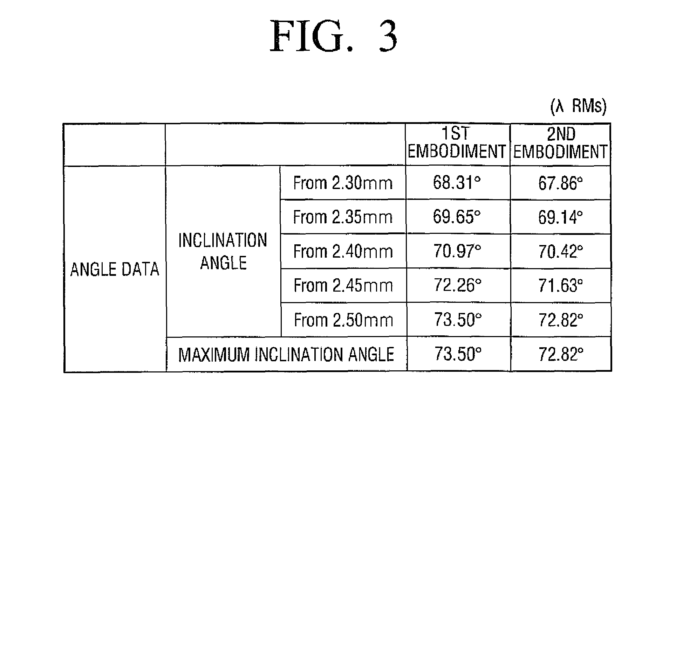

FIG. 2 is a view illustrating coefficients applied to an aspherical equation if the aspherical equation uses 10th or lower order term. FIG. 3 is a view illustrating result values of a maximum inclination angle according to the aspherical coefficients of FIG. 2.

The aspherical coefficients illustrated in FIG. 2 satisfy the sine condition and the coefficient 'L' of the second 2nd order function term satisfies equations 10 and 11.

As illustrated in FIG. 3, no difference may be found between the maximum inclination angle of the object lens to which the present general inventive concept is applied and the maximum inclination angle of the existing object lens even if only the 10th or lower order function term of the aspherical equation is used. If a 20th or lower order term of the existing aspherical equation is used, the maximum inclination angle of the object lens may be about 72°. However, the maximum inclination angle of the object lens may be about 71° even if only the 10th or lower order function term of the aspherical equation according to the present general inventive concept is used. Therefore, since a sufficient maximum inclination angle may be obtained simply by using the 10th or lower order function term if the aspherical equation according to the present general inventive concept is used, it is easy to design the object lens. The maximum inclination angle, recited herein, refers to a maximum angle between a tangent line of a lens surface and an optical axis.

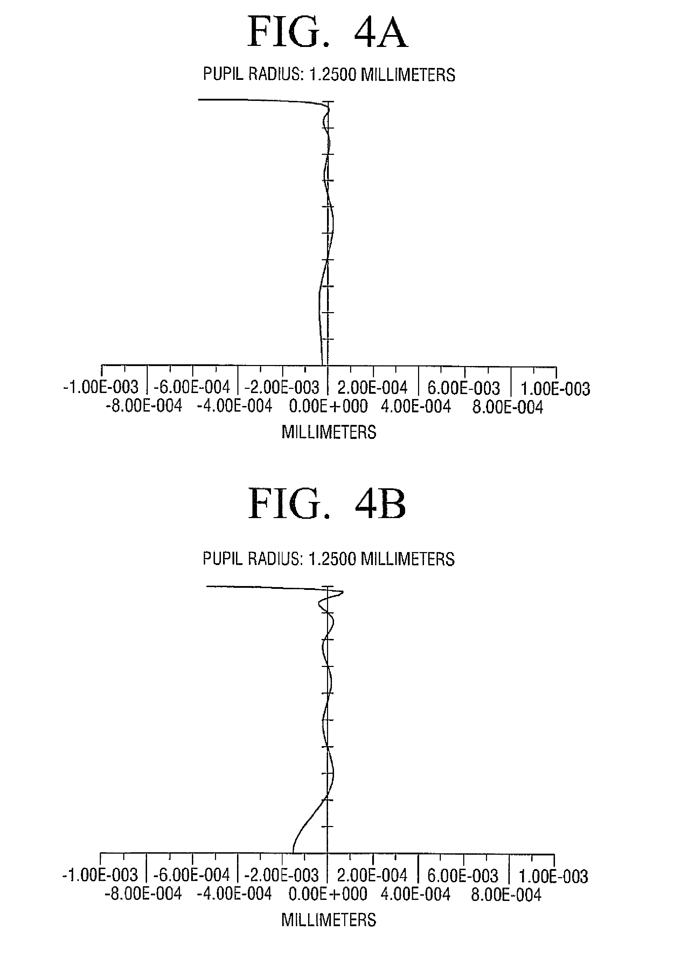

FIGS. 4A and 4B illustrate change in the aberration of the object lens designed according to exemplary embodiments of the present general inventive concept. As illustrated in FIGS. 4A and 4B, it may be possible to correct aberration of the object lens using only the aspherical equation having a 10th or lower order term. More specifically, even if aberration occurs around the center of a lens, the degree of aberration may be insignificant, and, also it can be seen that the aberration may be corrected even outside the effective radius of the lens.

If a 10th or more order term is further included in the aspherical equation, the maximum inclination angle of the object may become smaller and the effective radius may become larger.

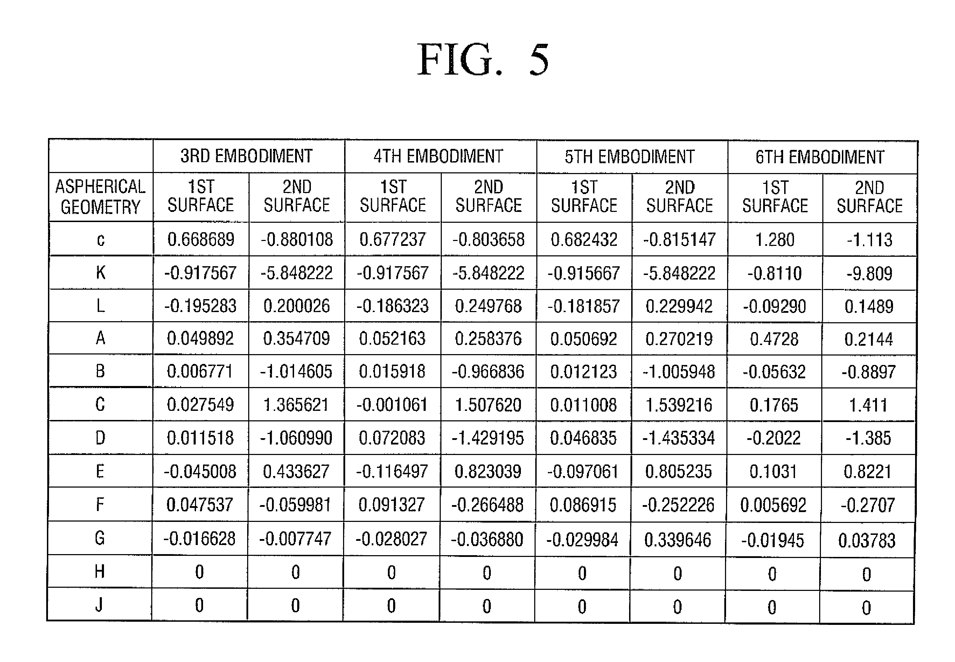

FIG. 5 is a view illustrating aspherical coefficients applied to an aspherical equation including a 16th or lower order function term according to other exemplary embodiments of the present general inventive concept.

In FIG. 5, the aspherical coefficient may contribute to the formation of the object lens, and in particular, the aspherical coefficient of the 10th or lower order term may contribute to the formation of the object lens within an effective radius and the aspherical coefficient of higher order term above 10th order term may contribute to the formation of the object lens outside the effective radius.

Also, the coefficient of the function term most contributing to the formation of the parts around the effective radius on the lens surface may be a positive number. Since the effective radius is 1.2mm in this embodiment, the coefficient of the function term most contributing to the formation of the effective radius may be the coefficient 'D' of the 10th order function term. Therefore, the aspherical equation in which D is set to be a positive number may be used.

In order to design the maximum inclination angle of the object lens to be low, the outermost function term of the aspherical equation may be a negative number.

In this exemplary embodiment, the coefficient 'G' of the 16th order function term, which is an outermost function term, satisfies the following equation 12:

[Equation 12]

$$-0.022 \le \frac{G}{f} \le -0.009$$

If G/f is less than -0.022, a problem may occur in the image height characteristic, and if G/f is greater than -0.009, the effect of the 16th order function term may become lessened so that the inclination angle of the lens surface does not greatly change.

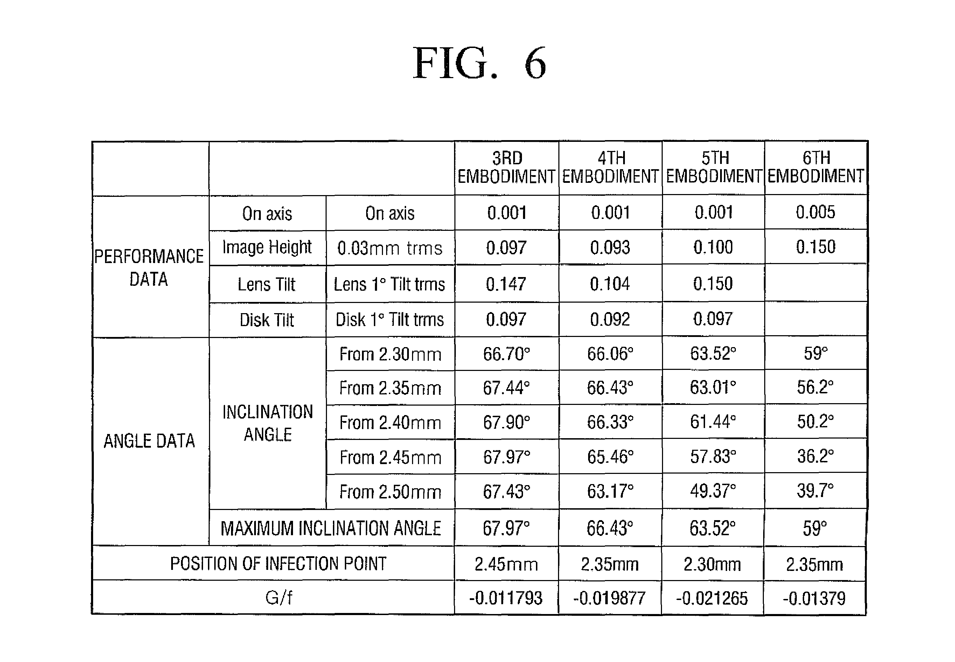

FIG. 6 is a view illustrating a simulation result regarding performance data and a maximum inclination angle of the object lens if the aspherical coefficients of FIG. 5 are used.

As illustrated in FIG. 6, even if the asphehrcial equation of 16th or lower order term is used, the performance of the object lens may still be effective and the maximum inclination angle of the object lens may become less than 68° . It can be seen that there is an infection point at a specific point of the lens surface to make the lens surface gentle.

The gentle inclination angle of the lens makes it easy to form the lens, increasing the yield of products. Also, since the aberration correction is effective outside of the effective radius, assembling tolerance may be set to be great, and also, since the maximum inclination angle that can be measured by a general aspherical geometry estimator may be about 65° , it may be possible to measure the inclination angle of the lens using the general aspherical geometry estimator. Also, since requirements to form a film for the antireflection coating is relaxed, the yield of the antireflection coating increases.

Also, the coefficient 'L' of the 16th order function term satisfy equation 12.

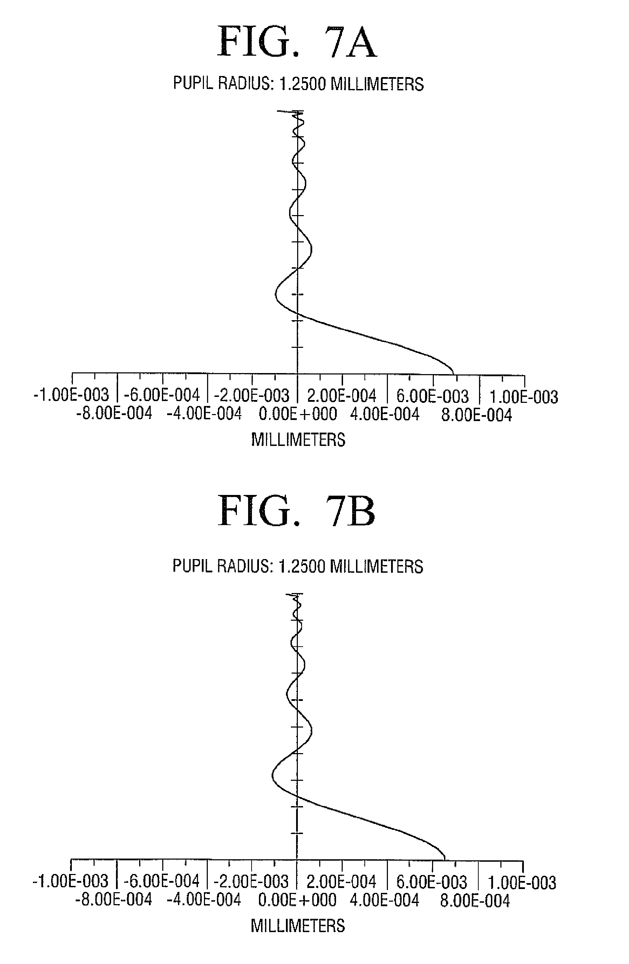

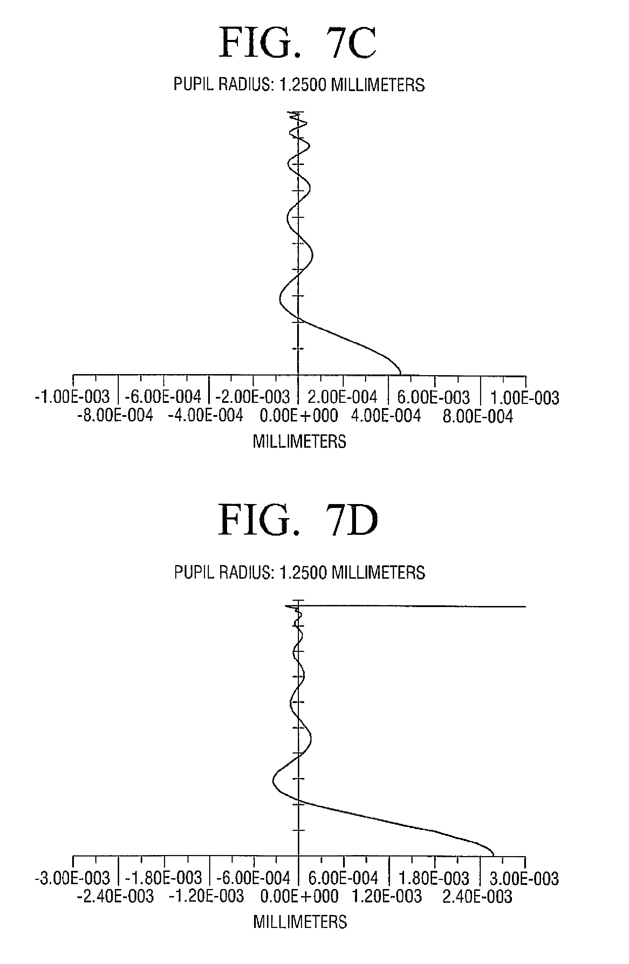

FIGS. 7A to 7D are views illustrating change in the aberration of the object lens which may be designed by applying the aspherical coefficients of FIG. 5. As illustrated in FIGS. 7A to 7D, if the aspherical equation having a 16th or lower order term is used, it may be possible to correct aberration correction outside of the effective radius.

In the above described FIGS. 7A to 7D, aberration may be corrected and a maximum inclination angle may be lowered using the 16th or lower function term of the asphercial equation. However, this should not be considered as limiting. It may be possible to determine the geometry around the lens using a 18th order function term or a 20th order function term of the aspherical equation or using combination of the 16th order function term and the 18th order function term or combination of higher order function terms. However, even in this case, if the highest order function term is set to a minus function, the inclination angle of the part around the lens may become gentle.

Also, in order to design the lens to have good image height characteristic and decenter characteristic, the angle θ between the beam of an outermost circumstance passing through the inside of the object lens and the optical axis may satisfy following equation 13:

[Equation 13]

$$36° \leq \theta \leq 40°$$

If θ is less than 36° or greater than 40°, comatic aberration or other aberration may be great around the lens.

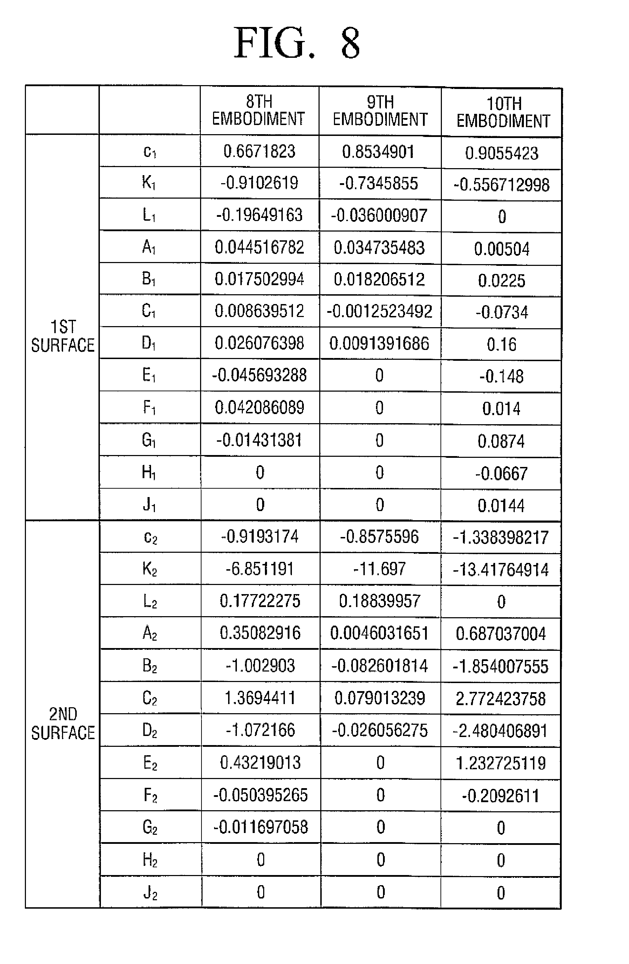

FIG. 8 is a view illustrating examples of the aspherical coefficients of the object lens according to other exemplary embodiments of the present general inventive concept.

As illustrated in FIG. 8, in the 8th exemplary embodiment, an aspherical equation including a 16th or lower term may be applied, in the 9th exemplary embodiment, an aspherical equation including a 10th or lower term may be applied, and in the 10th exemplary embodiment, an aspherical equation including a 20th or lower term may be applied to a first surface of the lens, whereas an aspherical equation including a 14th or lower term may be applied to a second surface of the lens.

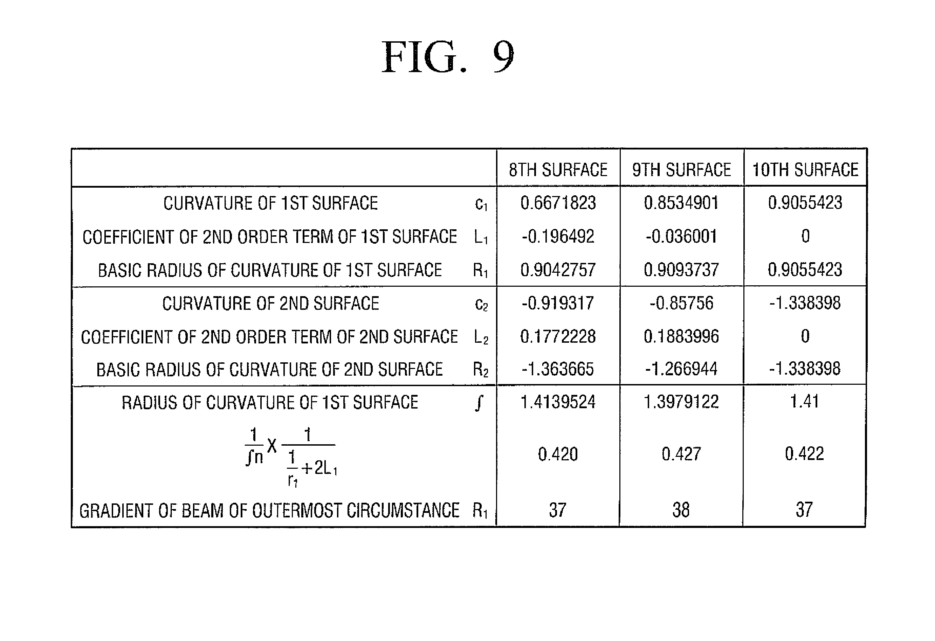

FIG. 9 is a view illustrating a basic radius of curvature R calculated based on 'c' and the coefficient 'L' of the 2nd order function term of FIG. 8.

As illustrated in FIG. 9, even if there is a deviation of 'c' (inverse number of 'r') or the coefficient 'L' of the 2nd order function term, the basic radius of curvature 'R' obtained by equation 10 is constantly maintained. Also, the focal distance 'f' is obtained by the following equation 14:

[Equation 14]

$$\frac{1}{f} = (n-1)(\frac{1}{R_1} - \frac{1}{R_2}) + \frac{(n-1)^2 d}{nR_1 R_2}$$

The focal distance 'f' obtained by equation 14 is 1.41mm, which may be applicable to a Blue-ray disk.

Also, the gradient θ of the beam of the outermost circumstance may be 37° to 38°, being uniformly distributed.

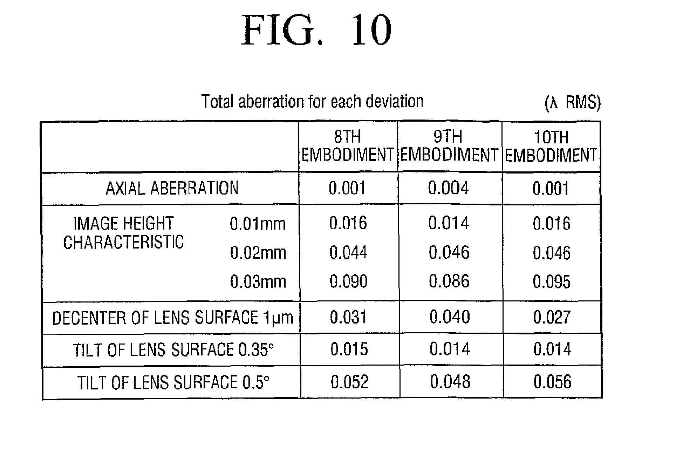

FIG. 10 is a view illustrating aberration calculated for manufacturing or assembling tolerance according to other exemplary embodiments of the present general inventive concept.

As illustrated in FIG. 10, the total aberration according to each deviation falls in allowable range even if the aspherical equation of the present general inventive concept is used.

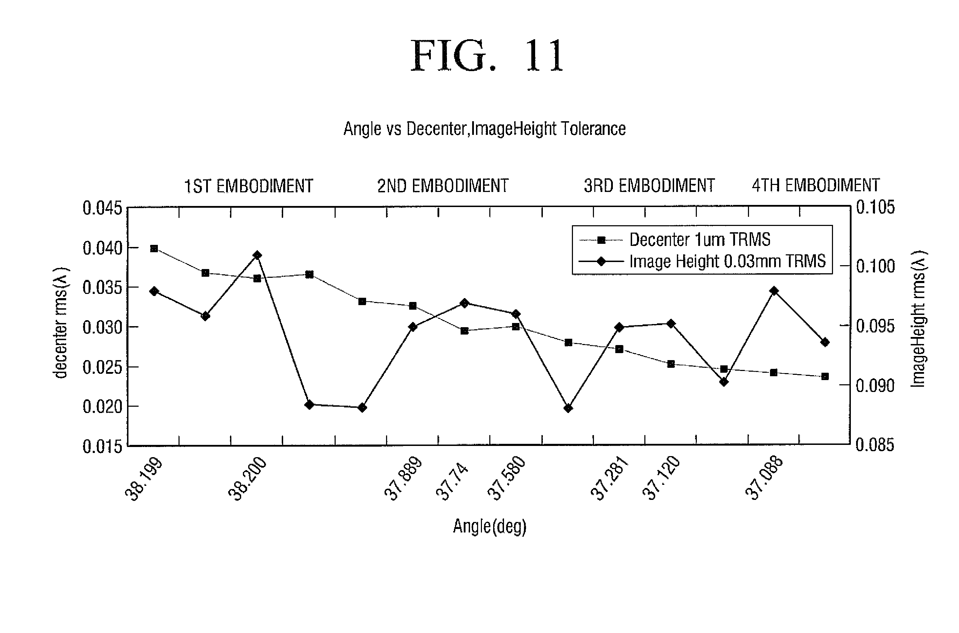

FIG. 11 is a view illustrating a simulation result regarding a decenter characteristic and an image height according to the gradient of the beam of the outermost circumstance. If the gradient θ of the beam of the outermost circumstance is 37° to 38°, good decenter characteristic and aberration of the image height may be obtained.

As a result, if the aspherical equation including two 2nd order function terms is applied when the aspherical lens is designed, the manufacturing or assembling tolerance may become larger. Therefore, the product yield may increase and requirement for a lens injection and molding device may be relaxed, and the processing accuracy of the mold may increase.

Although various example embodiments of the present general inventive concept have been illustrated and described, it will be appreciated by those skilled in the art that changes may be made in these example embodiments without departing from the principles and spirit of the general inventive concept, the scope of which is defined in the appended claims and their equivalents.

**Claims**

1. An object lens, comprising:

    an aspherical lens surface, wherein an aspherical equation, which is applied to form the aspherical lens surface, includes two 2nd order function terms.

2. The object lens of claim 1, wherein the aspherical equation includes a function term of order higher than 2nd order.

3. The object lens of claim 2, wherein the function term of order higher than 2nd order includes the following equation:

$$Z_1(h) = Ah^4 + Bh^6 + Ch^8 + Dh^{10}$$

wherein 'Z₁(h)' denotes a distance from a surface passing a vertex of the object lens perpendicular to an optical axis to a lens surface facing a light source, 'h' denotes a distance from an axis of the object lens to a specific point perpendicular to the axis, and 'A', 'B', 'C', and 'D' denote aspherical coefficients.

4. The object lens of claims 2 or 3, wherein the function term of order higher than 2nd order includes the following equation:

$$Z_2(h) = Ah^4 + Bh^6 + Ch^8 + Dh^{10} + Eh^{12} + Fh^{14} + Gh^{16}$$

wherein 'Z₂(h)' denotes a distance from a surface passing a vertex of the object lens perpendicular to an optical axis to a lens surface facing a light source, 'h' denotes a distance from an axis of the object lens to a specific point perpendicular to the axis, and 'A', 'B', 'C', 'D', 'E', 'F', and 'G' denote aspherical coefficients.

5. The object lens of claim 4, wherein the coefficient 'G' of the 16th order function term is a negative number.

6. The object lens of claims 4 or 5, wherein the coefficient 'G' of the 16th order function term satisfies the following equation:

$$-0.022 \leq \frac{G}{f} \leq -0.009$$

wherein 'f' denotes a focal distance.

7. The object lens of claims any one of 4 to 6, wherein a maximum inclination angle of the object lens is less than or equal to 68°.

8. The object lens of claims any one of 1 to 7, where a first 2nd order function term of the two 2nd function terms indicates one of a spherical surface, a hyperboloid, an ellipsoidal surface, a paraboloidal surface, and a conicoid except a conic surface.

9. The object lens of claim 8, wherein the first 2nd order function term includes the following equation:

$$Z_3(h) = \frac{ch^2}{1 + \sqrt{1 - (1 + K)c^2 h^2}}$$

wherein 'Z₃(h)' denotes a distance from a surface passing a vertex of the object lens perpendicular to an optical axis to a lens surface facing a light source, 'h' denotes a distance from an axis of the object lens to a specific point perpendicular to the axis, 'c' denotes a curvature which is a reference to determine an aspherical geometry, and 'K' denotes a conical constant.

10. The object lens of claim 9, wherein a second 2nd order function term of the two 2nd order function terms is a paraboloidal surface.

11. The object lens of claim 10, wherein the second 2nd order function term includes the following equation:

$$Z_4(h) = Lh^2$$

wherein '$Z_4(h)$' denotes a distance from a surface passing a vertex of the object lens perpendicular to an optical axis to a lens surface facing a light source, '$h$' denotes a distance from an axis of the object lens to a specific point perpendicular to the axis, and '$L$' denotes an aspherical coefficient.

12. The object lens of claim 11, wherein the coefficient '$L$' of the second 2nd order function term is an opposite sign of the '$c$' of the first 2nd order function term.

13. The object lens of claims 11 or 12, wherein the coefficient '$L$' of the second 2nd order function term is a negative number.

14. The object lens of claims any one of 11 to 13, wherein the coefficient '$L$' of the second 2nd order function term satisfies the following equation:

$$R = \frac{1}{\dfrac{1}{r} + 2 \times L}$$

wherein '$R$' denotes a basic curvature of the object lens and '$r$' denotes an inverse number of '$c$'.

15. The object lens of claims any one of 1 to 14, wherein an angle between a beam of an outermost circumstance passing through the inside of the object lens and an optical axis satisfies the following equation:

$$36° \leq \theta \leq 40°$$

# FIG. 1

# FIG. 2

| ASPHERICAL GEOMETRY | 1ST EMBODIMENT | | 2ND EMBODIMENT | |
|---|---|---|---|---|
| | 1ST SURFACE | 2ND SURFACE | 1ST SURFACE | 2ND SURFACE |
| c | 0.853490 | -0.857560 | 0.658907 | -0.799391 |
| K | -0.734586 | -11.697 | -0.886414 | -10.06925 |
| L | -0.036001 | 0.188400 | -0.208463 | 0.235479 |
| A | 0.034736 | -0.004603 | 0.039153 | -0.090659 |
| B | 0.018207 | 0.008260 | 0.020604 | 0.044867 |
| C | -0.001252 | -0.079013 | 0.002244 | -0.012274 |
| D | 0.009139 | 0.026056 | 0.006977 | 0.000703 |
| E | 0 | 0 | 0 | 0 |
| F | 0 | 0 | 0 | 0 |
| G | 0 | 0 | 0 | 0 |
| H | 0 | 0 | 0 | 0 |
| J | 0 | 0 | 0 | 0 |

# FIG. 3

(λ RMs)

|  |  |  | 1ST EMBODIMENT | 2ND EMBODIMENT |
|---|---|---|---|---|
| ANGLE DATA | INCLINATION ANGLE | From 2.30mm | 68.31° | 67.86° |
|  |  | From 2.35mm | 69.65° | 69.14° |
|  |  | From 2.40mm | 70.97° | 70.42° |
|  |  | From 2.45mm | 72.26° | 71.63° |
|  |  | From 2.50mm | 73.50° | 72.82° |
|  | MAXIMUM INCLINATION ANGLE | | 73.50° | 72.82° |

# FIG. 4A

PUPIL RADIUS: 1.2500 MILLIMETERS

-1.00E-003 | -6.00E-004 | -2.00E-003 | 2.00E-004 | 6.00E-003 | 1.00E-003
-8.00E-004  -4.00E-004  0.00E+000  4.00E-004  8.00E-004

MILLIMETERS

# FIG. 4B

PUPIL RADIUS: 1.2500 MILLIMETERS

-1.00E-003 | -6.00E-004 | -2.00E-003 | 2.00E-004 | 6.00E-003 | 1.00E-003
-8.00E-004  -4.00E-004  0.00E+000  4.00E-004  8.00E-004

MILLIMETERS

# FIG. 5

| ASPHERICAL GEOMETRY | 3RD EMBODIMENT | | 4TH EMBODIMENT | | 5TH EMBODIMENT | | 6TH EMBODIMENT | |
|---|---|---|---|---|---|---|---|---|
| | 1ST SURFACE | 2ND SURFACE | 1ST SURFACE | 2ND SURFACE | 1ST SURFACE | 2ND SURFACE | 1ST SURFACE | 2ND SURFACE |
| c | 0.668689 | -0.880108 | 0.677237 | -0.803658 | 0.682432 | -0.815147 | 1.280 | -1.113 |
| K | -0.917567 | -5.848222 | -0.917567 | -5.848222 | -0.915667 | -5.848222 | -0.8110 | -9.809 |
| L | -0.195283 | 0.200026 | -0.186323 | 0.249768 | -0.181857 | 0.229942 | -0.09290 | 0.1489 |
| A | 0.049892 | 0.354709 | 0.052163 | 0.258376 | 0.050692 | 0.270219 | 0.4728 | 0.2144 |
| B | 0.006771 | -1.014605 | 0.015918 | -0.966836 | 0.012123 | -1.005948 | -0.05632 | -0.8897 |
| C | 0.027549 | 1.365621 | -0.001061 | 1.507620 | 0.011008 | 1.539216 | 0.1765 | 1.411 |
| D | 0.011518 | -1.060990 | 0.072083 | -1.429195 | 0.046835 | -1.435334 | -0.2022 | -1.385 |
| E | -0.045008 | 0.433627 | -0.116497 | 0.823039 | -0.097061 | 0.805235 | 0.1031 | 0.8221 |
| F | 0.047537 | -0.059981 | 0.091327 | -0.266488 | 0.086915 | -0.252226 | 0.005692 | -0.2707 |
| G | -0.016628 | -0.007747 | -0.028027 | -0.036880 | -0.029984 | 0.339646 | -0.01945 | 0.03783 |
| H | 0 | 0 | 0 | 0 | 0 | 0 | 0 | 0 |
| J | 0 | 0 | 0 | 0 | 0 | 0 | 0 | 0 |

EP 2 239 599 A2

## FIG. 6

| | | | 3RD EMBODIMENT | 4TH EMBODIMENT | 5TH EMBODIMENT | 6TH EMBODIMENT |
|---|---|---|---|---|---|---|
| PERFORMANCE DATA | On axis | On axis | 0.001 | 0.001 | 0.001 | 0.005 |
| | Image Height | 0.03mm trms | 0.097 | 0.093 | 0.100 | 0.150 |
| | Lens Tilt | Lens 1° Tilt trms | 0.147 | 0.104 | 0.150 | |
| | Disk Tilt | Disk 1° Tilt trms | 0.097 | 0.092 | 0.097 | |
| ANGLE DATA | INCLINATION ANGLE | From 2.30mm | 66.70° | 66.06° | 63.52° | 59° |
| | | From 2.35mm | 67.44° | 66.43° | 63.01° | 56.2° |
| | | From 2.40mm | 67.90° | 66.33° | 61.44° | 50.2° |
| | | From 2.45mm | 67.97° | 65.46° | 57.83° | 36.2° |
| | | From 2.50mm | 67.43° | 63.17° | 49.37° | 39.7° |
| | MAXIMUM INCLINATION ANGLE | | 67.97° | 66.43° | 63.52° | 59° |
| POSITION OF INFECTION POINT | | | 2.45mm | 2.35mm | 2.30mm | 2.35mm |
| G/f | | | -0.011793 | -0.019877 | -0.021265 | -0.01379 |

EP 2 239 599 A2

# FIG. 7A

PUPIL RADIUS: 1.2500 MILLIMETERS

| -1.00E-003 | -6.00E-004 | -2.00E-003 | 2.00E-004 | 6.00E-003 | 1.00E-003 |
| -8.00E-004 | -4.00E-004 | 0.00E+000 | 4.00E-004 | 8.00E-004 | |

MILLIMETERS

# FIG. 7B

PUPIL RADIUS: 1.2500 MILLIMETERS

| -1.00E-003 | -6.00E-004 | -2.00E-003 | 2.00E-004 | 6.00E-003 | 1.00E-003 |
| -8.00E-004 | -4.00E-004 | 0.00E+000 | 4.00E-004 | 8.00E-004 | |

MILLIMETERS

# FIG. 7C

PUPIL RADIUS: 1.2500 MILLIMETERS

| -1.00E-003 | -6.00E-004 | -2.00E-003 | 2.00E-004 | 6.00E-003 | 1.00E-003 |

-8.00E-004  -4.00E-004  0.00E+000  4.00E-004  8.00E-004

MILLIMETERS

# FIG. 7D

PUPIL RADIUS: 1.2500 MILLIMETERS

| -3.00E-003 | -1.80E-003 | -6.00E-004 | 6.00E-004 | 1.80E-003 | 3.00E-003 |

-2.40E-003  -1.20E-003  0.00E+000  1.20E-003  2.40E-003

MILLIMETERS

# FIG. 8

| | | 8TH EMBODIMENT | 9TH EMBODIMENT | 10TH EMBODIMENT |
|---|---|---|---|---|
| 1ST SURFACE | $c_1$ | 0.6671823 | 0.8534901 | 0.9055423 |
| | $K_1$ | -0.9102619 | -0.7345855 | -0.556712998 |
| | $L_1$ | -0.19649163 | -0.036000907 | 0 |
| | $A_1$ | 0.044516782 | 0.034735483 | 0.00504 |
| | $B_1$ | 0.017502994 | 0.018206512 | 0.0225 |
| | $C_1$ | 0.008639512 | -0.0012523492 | -0.0734 |
| | $D_1$ | 0.026076398 | 0.0091391686 | 0.16 |
| | $E_1$ | -0.045693288 | 0 | -0.148 |
| | $F_1$ | 0.042086089 | 0 | 0.014 |
| | $G_1$ | -0.01431381 | 0 | 0.0874 |
| | $H_1$ | 0 | 0 | -0.0667 |
| | $J_1$ | 0 | 0 | 0.0144 |
| 2ND SURFACE | $c_2$ | -0.9193174 | -0.8575596 | -1.338398217 |
| | $K_2$ | -6.851191 | -11.697 | -13.41764914 |
| | $L_2$ | 0.17722275 | 0.18839957 | 0 |
| | $A_2$ | 0.35082916 | 0.0046031651 | 0.687037004 |
| | $B_2$ | -1.002903 | -0.082601814 | -1.854007555 |
| | $C_2$ | 1.3694411 | 0.079013239 | 2.772423758 |
| | $D_2$ | -1.072166 | -0.026056275 | -2.480406891 |
| | $E_2$ | 0.43219013 | 0 | 1.232725119 |
| | $F_2$ | -0.050395265 | 0 | -0.2092611 |
| | $G_2$ | -0.011697058 | 0 | 0 |
| | $H_2$ | 0 | 0 | 0 |
| | $J_2$ | 0 | 0 | 0 |

# FIG. 9

EP 2 239 599 A2

| | | 8TH SURFACE | 9TH SURFACE | 10TH SURFACE |
|---|---|---|---|---|
| CURVATURE OF 1ST SURFACE | $c_1$ | 0.6671823 | 0.8534901 | 0.9055423 |
| COEFFICIENT OF 2ND ORDER TERM OF 1ST SURFACE | $L_1$ | -0.196492 | -0.036001 | 0 |
| BASIC RADIUS OF CURVATURE OF 1ST SURFACE | $R_1$ | 0.9042757 | 0.9093737 | 0.9055423 |
| CURVATURE OF 2ND SURFACE | $c_2$ | -0.919317 | -0.85756 | -1.338398 |
| COEFFICIENT OF 2ND ORDER TERM OF 2ND SURFACE | $L_2$ | 0.1772228 | 0.1883996 | 0 |
| BASIC RADIUS OF CURVATURE OF 2ND SURFACE | $R_2$ | -1.363665 | -1.266944 | -1.338398 |
| RADIUS OF CURVATURE OF 1ST SURFACE | $f$ | 1.4139524 | 1.3979122 | 1.41 |
| $\dfrac{1}{fn} \times \dfrac{1}{\dfrac{1}{r_1}+2L_1}$ | | 0.420 | 0.427 | 0.422 |
| GRADIENT OF BEAM OF OUTERMOST CIRCUMSTANCE | $R_1$ | 37 | 38 | 37 |

# FIG. 10

Total aberration for each deviation                                   (λ RMS)

| | | 8TH EMBODIMENT | 9TH EMBODIMENT | 10TH EMBODIMENT |
|---|---|---|---|---|
| AXIAL ABERRATION | | 0.001 | 0.004 | 0.001 |
| IMAGE HEIGHT CHARACTERISTIC | 0.01mm | 0.016 | 0.014 | 0.016 |
| | 0.02mm | 0.044 | 0.046 | 0.046 |
| | 0.03mm | 0.090 | 0.086 | 0.095 |
| DECENTER OF LENS SURFACE 1μm | | 0.031 | 0.040 | 0.027 |
| TILT OF LENS SURFACE 0.35° | | 0.015 | 0.014 | 0.014 |
| TILT OF LENS SURFACE 0.5° | | 0.052 | 0.048 | 0.056 |

# FIG. 11

Angle vs Decenter,ImageHeight Tolerance

EP 2 239 599 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 10200929954